# EUROPEAN PATENT SPECIFICATION

(11) **EP 2 385 994 B1**
(45) Date of publication and mention of the grant of the patent: **03.07.2019**
(21) Application number: 10735439.1
(22) Date of filing: 02.02.2010
(51) Int. Cl.: C22B 23/00, C22B 1/14, C22B 3/08

(54) **METHOD OF AGGLOMERATION**
AGGLOMERATIONSVERFAHREN
PROCÉDÉ D'AGGLOMÉRATION

(30) Priority: 02.02.2009 AU 2009900378
(43) Date of publication of application: 16.11.2011
(73) Proprietor: Cerro Matoso SA, Bogotá (CO)
(72) Inventor: MORA, Nelson, Perth, Western Australia 6000 (AU); MORONEY, Adam, Sean, Fern Bay, New South Wales 2295 (AU); THOMAS, Scott, Perth, Western Australia 6000 (AU)
(74) Representative: Appleyard Lees IP LLP
(86) International application number: PCT/AU2010/000096
(87) International publication number: WO 2010/085857

(56) References cited:
- WO-A1-2007/143779
- WO-A1-2007/143779
- WO-A1-2008/022395
- WO-A1-2008/034188
- WO-A1-2009/018619
- WO-A2-01/75184
- US-A- 3 845 189

## Description

### Field of the Invention

The present invention relates to a method of agglomeration of nickel laterite ores, particularly to the agglomeration of ores for the purpose of heap leaching.

### Background Art

The following discussion of the background to the invention is intended to facilitate an understanding of the invention. However, it should be appreciated that the discussion is not an acknowledgement or admission that any of the material referred to was published, known or part of the common general knowledge as at the priority date of the application.

Heap leaching is one method for economically extracting metal from low-grade ores. Generally, it involves piling raw ore into heaps and introducing a leaching solution over the top of the heap to percolate down through the heap. The leaching solution extracts the desired metal values from the ore and is collected as a pregnant leach solution (PLS), for example, in perforated drainage pipes located beneath the heap. The PLS is then transported to a processing plant where the desired metal values are separated from the impurities in the PLS and recovered.

An agglomeration process can be used to bind finer particles in the ore to form larger particles and thereby improve an ore's leaching characteristics. In heap leaching, larger particle sizes facilitates percolation of leach solutions through the heaped ore material and ensures that the target metal values contained in the fine materials are contacted by the leaching solution.

United States Patent US6312500 in the name of BHP Minerals International Inc describes one method of agglomerating laterite ores. In this patent, the ore is initially crushed, when necessary, to a particle size range of less than one inch (2.54cm). The particles are then agglomerated by mixing the particles with a concentrated sulfuric acid in a rotary disk or drum agglomerator. The agglomerated particles are generally cured in open air, undisturbed for a time period long enough so that the sulfuric acid has enough chemical reaction time to attack the nickel containing minerals, partially dissolve some of the ore, remove some of the contained water (by air evaporation) and allow basic sulfates and/or silicates, or silica gel to be precipitated and form into a binding agent to keep the remaining ore particles together in a pellet form. The curing time can range from one hour to several days.

The use of strong or concentrated acid in an agglomeration process is advantageous due to the generation of heat from the exothermic reaction of the aid and the small amount of moisture present in the ore. This can result in better break-down of the ore minerals and exposing the target metal values. However, one of the main problems with using concentrated acid solutions for agglomeration is that the resulting agglomerates can become friable, resulting in blockages in the heap once agglomerates begin to break into smaller particles. The use of concentrated acid can also promote dissolution of unwanted purities.

Greek patent GR1001555 in the name of Agatzini teaches a heap leaching process in which low to very low grade nickel and cobalt oxide ores can be agglomerated by wetting the ore with either water or leach solution (lixiviant) which preferably contains between 1N to 2N (49 to 98 g/L) sulfuric acid.

International patent publication WO2007143779 in the name of Murrin Murrin Operations Pty Ltd relates to a method for agglomeration of a Nickel Laterite ore where the moisture content of an ore material to be agglomerated is adjusted to a predetermined level, and that ore material is agglomerated using an acid containing agglomerating solution having an acid concentration that does not exceed about 100g/L. The use of a dilute acid solution for agglomeration is taught as providing a suitable agglomerated ore material ("agglomerate") that does not sacrifice the structural integrity of the agglomerates. Heap leachate percolation rates and extraction levels are also taught as being improved.

The applicant's have surprisingly found that agglomeration of nickel laterite ores is optimised using a selected range of conditions that fall outside the conditions covered by GR1001555, US6312500 and WO2007143779.

Throughout the specification, the terms "ore" and "ore material" are understood to include nickel laterite in the form of any one of ore, ore reject material, concentrate, waste rock or mill scats material.

### Summary of the Invention

According to the present invention, there is provided a method of agglomerating a nickel laterite ore comprising the steps of:
i) adjusting the moisture content of nickel laterite ore material to be agglomerated to between 5% and 30% wt/wt;
ii) feeding the nickel laterite ore material to be agglomerated into an agglomeration circuit; and
iii) adding a sulfuric acid containing agglomerating solution to the ore material in the agglomeration circuit to provide an agglomerated ore material, wherein the acid concentration of the agglomerating solution is between 140 to 280 g/L.

The applicant has found that despite the teaching of prior patent publications, nickel laterite ore is optimally agglomerated using an agglomerating solution having a sulfuric acid concentration of between 140 to 280 g/L. Optimal agglomeration of nickel laterite ore improves the permeability of the ore heap, and enables the agglomerated ore to be piled in higher heaps as compared to prior agglomerated ore, which in turn allows a heap leaching process to achieve more efficient recovery rates, increase output rates and reduce costs.

The agglomerating method of the present invention can be used for the limonitic portion of the ore or the saprolitic portion which may be selected to be leached separately, or for a whole of ore mix.

The agglomerating solution includes sulphuric acid content capable of agglomerating smaller particles of nickel laterite ore into larger particles. The agglomerating solution may also contain water in the form of water, underground brine, saline solution, hypersaline solution, sea water, recycle solution or a mixture thereof. In some embodiments, the agglomerating solution may comprise a pregnant leach solution (PLS) from a downstream heap leach circuit.

The amount of sulfuric acid added to the agglomeration step per tonne of ore can vary depending on the actual composition of the nickel laterite ore to be agglomerated, the moisture content of the ore, the acid used and other factors. Typically, agglomeration is achieved by adding between 20 and 50kg of acid per dry tonne of ore material. In a preferred embodiment, agglomeration is achieved by adding about 35kg of acid per dry tonne of ore.

In some embodiments, it may be advantageous to reduce the size of the ore before the agglomeration step. In these embodiments, the process of the present invention further includes a step prior to the ore feeding step of reducing the size of the nickel laterite ore material to be agglomerated to less than 1 inch. The ore can be reduced in size using any suitable size reduction equipment including ball mills, crushers, hammer mills or the like.

The moisture content of the ore has been found to affect the agglomerating step of the present invention. Therefore, the ore is pre-treated to control the moisture content of the ore material to be agglomerated. Accordingly, the process of the present invention further includes a step prior to the ore feeding step of adjusting the moisture content of an ore material to be agglomerated to a predetermined level. For example, the initial (natural_ moisture content of the ore material prior to agglomeration can be between 5% and 30% wt/wt. This initial moisture content of the ore material can be adjusted prior to agglomeration to a selected moisture content between
5% and 30% wt/wt. In other embodiments, to between 15% and 25% wt/wt. After agglomeration the final moisture content of the ore material can be adjusted to be between 5% and 40% wt/wt with the addition of or without the addition of aqueous solution. However, it is to be understood that other ranges may be suitable for an individual ore. This level will vary for individual ores, depending on the source and mineralogy, and will be determined by test work for each case.

This step can be done either after, before or during the size reduction step if such a step is undertaken.

The agglomerated ore is preferably cured for an amount of time that may vary from an hour to several days, depending on the completion of the chemical bonding process that takes place within the resultant particles. This will vary for each individual ore, depending on the ore source and mineralogy. In most cases, the optimum curing time will need to be established experimentally for each individual ore. In these embodiments, the process of the present invention further comprises a step, after the acid addition step of curing the agglomerated ore for a predetermined curing time. The curing time of the agglomerated ore material can be anywhere between 1 hour to several days.

The agglomeration circuit of the agglomeration step can include any suitable agglomeration equipment, for example one or more drum or rotary disc agglomerator.

### Detailed Description

The present invention will now be described with reference to particular preferred embodiments of the present invention.

In accordance with the present invention, a method of agglomerating nickel laterite ores is provided for improving the heap leaching characteristics of that laterite ore. In a typical nickel laterite heap leaching process, the particle size of the nickel laterite ore is first reduced for example by crushing in a ball mill, where necessary, to an average particle size of less than 2.54cm and, preferably about 6 mesh (3350 micron) and about 2cm.

In some embodiments, the nickel laterite ore is subjected to a moisture adjustment step in which the initial (natural) moisture content of the ore is adjusted to a predetermined level by air drying the ore in a heap, or by adding water to the ore, as required before agglomeration. For example, in wet conditions (rain or similar conditions), a too-wetted laterite may be sun-dried to decrease the initial moisture. The final moisture content of the ore is determined with bench or small continuous operation to determine how much extra water/solution in addition to concentrated acid can be added in ore to create qualified pellets for good permeability.

The crushed particles are then fed into an agglomeration stage to be agglomerated. In this stage, the particles are mixed with an agglomerating solution, preferably a solution containing between about 140 and 280g/L of sulphuric acid, to agglomerate the ore particles. The agglomeration step may be carried out in a rotary disk, drum, or other suitable apparatus known in the art. The sulfuric acid may be mixed with a source of water, including saline, underground brine, fresh water, sea water, hypersaline solution or recycle solution. The quantity of sulfuric acid used is generally that necessary to attack the acid consuming mineral materials in the ore (generally the readily available MgO from magnesium silicates that are present in the ore). It has been found that about 35kg of sulfuric acid per ton of ore (dry base). However, the quantity can range from about 20 to about 50 kg sulfuric acid per ton of ore (dry base). The resulting agglomerated particles (pellets) have an average particle size between about 6 mesh (3350 micron) and about 2.54cm.

The agglomerated pellets are generally cured for an amount of time that may vary from an hour to several days, depending on the completion of the chemical bonding process that takes place. Preferably, the curing time ranges
from about 4 hours to 10 hours. During curing, the agglomerated ore particles (usually in the form of pellets) are stored in open air, undisturbed for a time period long enough so that the sulfuric acid will have enough chemical reaction time to partially dissolve some of the ore and to remove some of the contained water by air evaporation such that basic sulfates and/or silicates, or silica gel is precipitated and formed into a binding agent to keep the remaining ore particles together in pellet form. The chemical bonding process consists of resolubilisation of precipitated silica gel and the dissolution of iron and magnesium from the ore with the strong acid used for pelletization. During the curing process, excess water evaporates and some of the water is taken as crystal water and causes a re-precipitation of magnesium-iron-silica gel "glue" that acts as a chemical bonding agent between the solid particles making solid pellets that have a definite physical strength. The curing time will be a function of the quantity of excess, or free, water that needs to be removed from the "glue" phase.

The agglomerated pellets are then formed into a heap having a base and a top. A leach solution is applied to the top of the heap and allowed to percolate downward through the heap. The PLS is collected at the bottom of the heap and may be recycled, collected for nickel (and/or cobalt) recovery, or a combination of both. The leach solution is preferably sulfuric acid. The leach solution may be a recycled solution from which pay metal values have been recovered. Preferably, the pelletized agglomerated ore is formed into two, or a series of, heaps and leached in a counter-current process.

In the practice of the present invention, acid in the range of about 20 to about 50 kgs of sulfuric acid per ton of ore is all that is required to produce a pellet with the desired physical characteristics to withstand handling and pile loads that are incurred from heaping the ore. Overall, optimum agglomerating acid dose for agglomeration based on a Knappes permeability test is around 35 kgs of sulfuric acid per ton of ore using an agglomerating solution of 140 to 280 g/L sulfuric acid.

Where the terms "comprise", "comprises", "comprised" or "comprising" are used in this specification (including the claims) they are to be interpreted as specifying the presence of the stated features, integers, steps or components, but not precluding the presence of one or more other feature, integer, step, component or group thereof.

## Claims

1. A method of agglomerating a nickel laterite ore comprising the steps of:
i) adjusting the moisture content of nickel laterite ore material to be agglomerated to between 5% and 30% wt/wt;
ii) feeding the nickel laterite ore material to be agglomerated into an agglomeration circuit; and
iii) adding a sulfuric acid containing agglomerating solution to the ore material in the agglomeration circuit to provide an agglomerated ore material, wherein the acid concentration of the agglomerating solution is between 140 to 280 g/L.

2. A method according to claim 1, wherein agglomerating solution is added at between 20 and 50 kg of acid per tonne of ore material.

3. A method according to any one of the preceding claims, wherein agglomerating solution is added at about 35kg of acid per tonne of ore.

4. A method according to any one of the preceding claims, further including a step of:
reducing the size of the nickel laterite ore material to be agglomerated to less than 1 inch, prior to feeding the ore into the agglomeration circuit.

5. A method according to any one of the preceding claims, further comprising the step of curing the agglomerated ore for a predetermined curing time.

6. A method according to claim 5, wherein the curing time of the agglomerated ore material is between 1 hour to 10 days.

7. A method according to claim 5 or 6, wherein, the curing time of the agglomerated ore material falls within the range of about 1 hour to 10 hours.

8. A method according to any one of the preceding claims, wherein the agglomeration circuit includes one or more drum or rotary disc agglomerators.

9. A method according to any one of the preceding claims, wherein the agglomerating solution comprises a pregnant leach solution from a downstream heap leach circuit.

## Patentansprüche

1. Verfahren zum Agglomerieren eines Nickellateriterzes, umfassend die folgenden Schritte:
i) Einstellen des Feuchtigkeitsgehalts des zu agglomerierenden Nickellaterit-Erzmaterials auf zwischen 5 und 30 Gew.-%;
ii) Zuführen des zu agglomerierenden Nickellaterit-Erzmaterials zu einem Agglomerationskreislauf;
und
iii) Zugeben einer schwefelsäurehaltigen Agglomerationslösung zu dem Erzmaterial in dem Agglomerationskreislauf, um ein agglomeriertes Erzmaterial bereitzustellen, wobei die Säurekonzentration der Agglomerationslösung zwischen 140 und 280 g/l beträgt.

2. Verfahren nach Anspruch 1, wobei die Agglomerationslösung mit zwischen 20 bis 50 kg Säure pro Tonne Erzmaterial zugegeben wird.

3. Verfahren nach einem der vorhergehenden Ansprüche, wobei die Agglomerationslösung mit etwa 35 kg Säure pro Tonne Erz zugegeben wird.

4. Verfahren nach einem der vorhergehenden Ansprüche, ferner aufweisend einen folgenden Schritt:
Reduzieren der Größe des zu agglomerierenden Nickellaterit-Erzmaterials auf weniger als 1 Zoll, bevor das Erz dem Agglomerationskreislauf zugeführt wird.

5. Verfahren nach einem der vorhergehenden Ansprüche, ferner umfassend den Schritt des Aushärtens des agglomerierten Erzes für eine vorbestimmte Härtungszeit.

6. Verfahren nach Anspruch 5, wobei die Härtungszeit des agglomerierten Erzmaterials zwischen 1 Stunde und 10 Tagen beträgt.

7. Verfahren nach Anspruch 5 oder 6, wobei die Härtungszeit des agglomerierten Erzmaterials in den Bereich von etwa 1 Stunde bis 10 Stunden fällt.

8. Verfahren nach einem der vorhergehenden Ansprüche, wobei der Agglomerationskreislauf einen oder mehrere Trommel- oder Drehscheibenagglomeratoren aufweist.

9. Verfahren nach einem der vorhergehenden Ansprüche, wobei die Agglomerationslösung eine Mutterauslaungslösung aus einem stromabwärtigen Haufenauslaugungskreislauf umfasst.

## Revendications

1. Procédé d'agglomération d'un minerai de latérite de nickel comprenant les étapes consistant à :
i) ajuster le taux d'humidité d'un matériau de minerai de latérite de nickel à agglomérer entre 5 % et 30 % pds/pds ;
ii) introduire le matériau de minerai de latérite de nickel à agglomérer dans un circuit d'agglomération ; et
iii) ajouter une solution d'agglomération contenant de l'acide sulfurique au matériau de minerai dans le circuit d'agglomération pour obtenir un matériau de minerai aggloméré, la concentration d'acide de la solution d'agglomération se situant entre 140 et 280 g/L.

2. Procédé selon la revendication 1, dans lequel la solution d'agglomération est ajoutée à 20 à 50 kg d'acide par tonne de matériau de minerai.

3. Procédé selon l'une quelconque des revendications précédentes, dans lequel la solution d'agglomération est ajoutée à environ 35 kg d'acide par tonne de minerai.

4. Procédé selon l'une quelconque des revendications précédentes, comportant en outre une étape consistant à :
réduire la taille du matériau de minerai de latérite de nickel à agglomérer à moins de 1 pouce, avant d'introduire le minerai dans le circuit d'agglomération.

5. Procédé selon l'une quelconque des revendications précédentes, comprenant en outre l'étape consistant à durcir le minerai aggloméré pendant un temps de durcissement prédéterminé.

6. Procédé selon la revendication 5, dans lequel le temps de durcissement du matériau de minerai aggloméré se situe entre 1 heure et 10 jours.

7. Procédé selon la revendication 5 ou 6, dans lequel le temps de durcissement du matériau de minerai aggloméré se situe dans la gamme d'environ 1 heure à 10 heures.

8. Procédé selon l'une quelconque des revendications précédentes, dans lequel le circuit d'agglomération comporte un ou plusieurs agglomérateurs à tambour ou à disque rotatif.

9. Procédé selon l'une quelconque des revendications précédentes, dans lequel la solution d'agglomération comprend une solution de lixiviation mère provenant d'un circuit de lixiviation en tas en aval.
